# EUROPÄISCHE PATENTANMELDUNG

(11) **EP 3 363 294 A1**
(43) Veröffentlichungstag der Anmeldung: **22.08.2018**
(21) Anmeldenummer: 17156517.9
(22) Anmeldetag: 16.02.2017
(51) Int. Cl.: A22C 17/00, B26B 9/02

(54) **WERKZEUG ZUR VORBEREITUNG VON SPARE-RIBS FÜR DIE ZUBEREITUNG UND DESSEN NUTZUNG**

(71) Anmelder: Cavanaugh, Tim, 70376 Stuttgart (DE); Lorch, Thomas, 71640 Ludwigsburg (DE)
(72) Erfinder: Cavanaugh, Tim, 70376 Stuttgart (DE); Lorch, Thomas, 71640 Ludwigsburg (DE)
(74) Vertreter: Patentanwaltskanzlei Cartagena

(57) **Zusammenfassung**

Vorgeschlagen wird ein Werkzeug (10) zur Vorbereitung von Spare-Ribs (80) durch Entfernen von Silberhaut (92) und Fett (94). Das Werkzeug (10) verfügt über einen Griff (12) sowie über eine sich an den Griff in einer Haupterstreckungsrichtung (2) anschließende flache Klinge (16). Die Klinge (16) weist bezogen auf die Haupterstreckungsrichtung (2) eine asymmetrische Formgebung mit einer rechtsseitigen Klingenkante (20) und einer linksseitigen Klingenkante (40) auf. Die eine Klingenkante (20) ist mit gekrümmten Schabkante (22) ausgestattet, die zwischen einem proximalen Schabkantenende (24A) und einem distalen Schabkantenende (24B) mindestens einen Winkel von 75° überspannt, wobei das distale Schabkantenende (24B) und/oder ein distales Klingenende (16B) maximal eine Länge (L1) 60mm von einem Übergang (14) zwischen Griff (12) und Klinge (16) beabstandet ist. Die andere Klingenkante (40) ist mit einer quer zur Haupterstreckungsrichtung spitz hervor-ragenden Greifkontur (42) versehen.

## Beschreibung

### ANWENDUNGSGEBIET UND STAND DER TECHNIK

Die Erfindung betrifft ein Werkzeug zur Vorbereitung von Spare-Ribs für einen nachfolgenden Garprozess mit den Merkmalen des Anspruchs 1 sowie dessen Verwendung mit den Merkmalen des Anspruchs 13.

Bei Spare-Ribs (Schälrippchen) handelt es sich um ein eine Fleischspeise, die in Form von streifenartigen Leitern mit einer Mehrzahl von Rippchen und diese umgebendem Fleisch zubereitet werden. Je nach Art des Zuschnitts wird zwischen so genannten Babybackribs, St. Louis Cut Ribs und klassischen Spareribs unterschieden. Die Verwendung des Begriffs Spare-Ribs im weiteren meint stets die allgemeine Fleischspeise, umfassend unter anderem alle genannten Zuschnittsarten.

Im Rahmen der Vorbereitung von Spare-Ribs muss üblicherweise zunächst das Rippenfell, die so genannten Silberhaut, entfernt werden, da Sie ansonsten die Aromaaufnahme des Fleisches während der Garung verhindert und das Fleisch zäh werden lässt. Weiterhin werden üblicherweise unterhalb der Silberhaut Fettstreifen vor der Zubereitung entfernt.

Die Entfernung der Silberhaut erfolgt üblicherweise, indem ein Messer oder eines anderweitiges langes und flaches Werkzeug zwischen das Fleisch und die Sitberhaut eingeschoben wird und dann längs des Streifens verschoben wird, um die Silberhaut abschnittsweise vom Fleisch zu trennen. Dieser Vorgang ist mühsam und dauert vergleichsweise lange.

Die genannten Fettstreifen finden sich in unter der Silberhaut in Zwischenbereichen zwischen den Rippenknochen. Sie werden nach Entfernen der Silberhaut üblicherweise mit einem Messer oder einem Löffel schabend entfernt.

Insgesamt sind diese Vorbereitungshandlungen recht mühsam und zeitraubend. Gerade bei Zubereitung großer Mengen, wie es beispielsweise im gastronomischen Kontext erfolgt, nehmen diese Handlungen einen erheblichen Anteil der gesamten Vorbereitungszeit der Spare-Ribs ein.

### AUFGABE UND LÖSUNG

Aufgabe der Erfindung ist es, ein Werkzeug und eine Lehre zu dessen Verwendung zur Verfügung zu stellen, mittels derer es möglich ist, Spare-Ribs schnell, bequem und gründlich von Silberhaut und außenliegendem Fett unterhalb der Silberhaut zu befreien.

Die Aufgabe wird durch ein Werkzeug nach Anspruch 1 gelöst. Dieses Werkzeug verfügt über einen Griff sowie über eine sich an den Griff in einer Haupterstreckungsrichtung anschließende flache Klinge. Die Klinge weist bezogen auf die Haupterstreckungsrichtung eine asymmetrische Formgebung mit zwei Klingenkanten auf. Die eine Klingenkante ist zur Entfernung der Silberhaut vorgesehen und weist hierfür eine quer zur Haupterstreckungsrichtung spitz hervorragenden Greifkontur auf. Die andere Klingenkante ist mit gekrümmten Schabkante zum Entfernen des Fetts ausgebildet. Diese Schabkante überspannt zwischen einem proximalen Schabkantenende und einem distalen Schabkantenende mindestens einen Winkel von 75°. Das distale Schabkantenende und/oder ein distales Klingenende ist maximal um eine Länge von 60mm vom Übergang zwischen Griff und Klinge beabstandet ist.

Das erfindungsgemäße Werkzeug ist demnach im Bereich seiner Klinge mit zwei Teilwerkzeugen versehen, die in der Haupterstreckungsebene der Klinge aufeinander gegenüberliegenden Seiten vorgesehen sind.

Das eine Teilwerkzeug ist eine spitz hervorragende Greifkontur, die sich quasi quer zur Haupterstreckungsrichtung des Werkzeugs erstreckt und die in der Haupterstreckungsebene der Klinge eine spitze Ausgestaltung aufweist (Krümmungsradius <= 2 mm). Die Greifkontur dient dem Zweck, die Silberhaut zu untergreifen, um sie anschließend mittels des Werkzeuges abziehen zu können. Die spitze Ausgestaltung hilft beim Untergreifen, insbesondere jedoch beim vorzugsweise vorgesehenen Durchstechen der Silberhaut zum Zwecke des Ergreifens.

Auf der gegenüberliegenden Seite ist eine gekrümmte Schabkante vorgesehen, die vorzugsweise einen Krümmungsradius zwischen 10 mm und 40 mm, insbesondere vorzugsweise zwischen 15 mm und 30 mm, aufweist. Diese gekrümmte Schabkante ist in der Lage, zwischen den Rippenknochen an den Streifen angepresst schabend verwendet zu werden, wenn sie entlang der Ausrichtung der Rippenknochen durch die zwischen den Rippenknochen vorhandenen fettbehafteten Vertiefungen gezogen wird.

Die Klinge hat als Ganzes vorzugsweise eine Länge von maximal 60 mm. Vorzugsweise erstreckt sich auch die Schabkante bis zu einem distalen Ende der Klinge, so dass auch das distale Schabkantenende derart vom Griff beabstandet ist. Diese vergleichsweise kurze Länge der Klinge ist erheblich, da sowohl bei der Verwendung der Greifkontur als auch bei der Verwendung der Schabkante hohe Kräfte aufgebracht werden müssen und eine präzise FührungderTeilwerkzeuge möglich sein soll.

Die Schabkante erstreckt sich mindestens über 75°, worunter zu verstehen ist, dass die Ausrichtung der Klingenkante im Bereich des proximalen und distalen Endes der Schabkante miteinander mindestens einen Winkel von 75° einschließt. Die Wahl des Krümmungsradius hängt damit zusammen, wie weit die Rippenknochen voneinander beabstandet sind und wie dick die Fettstreifen zwischen den Rippenknochen sind.

Um ein Werkzeug zu schaffen, welches flexibel ist, weist die Schabkante vorzugsweise einen variablen Krümmungsradius auf, also in einem ersten Teilabschnitt einen Krümmungsradius, der geringer ist als der Krümmungsradius in einem zweiten Teilabschnitt. Dabei können die Krümmungsradien sprunghaft zwischen zwei aneinander angrenzenden Teilabschnitten wechseln. Vorteilhafter ist jedoch ein kontinuierlicher Anstieg des Krümmungsradius entlang der gekrümmten Schabkante, so dass das Werkzeug Teilabschnitte verschiedenster Krümmungsradien aufweist. Solch variable Krümmungsradien an einem Werkzeug gestatten es, dieses sowohl bei engstehenden Rippchen als auch bei voneinander weiter entfernten Rippchen mit dem jeweils perfekten Krümmungsradius an das Fleisch anpressen und das Fett schabend entfernen zu können.

Der Winkel von 75° reicht grundsätzlich für die Schabfunktion aus. Die gekrümmte Schabkante überspannt jedoch vorzugsweise einen größeren Winkel, vorzugsweise von mehr als 90°, insbesondere von mindestens 105°. Dabei erhebt sich die Schabkante vorzugsweise quer zur Haupterstreckungsrichtung über einen Klingenkantenabschnitt zwischen Schabkante und Griff, insbesondere vorzugsweise um eine Distanz von mindestens 2 mm oder gar um mindestens 5 mm.

Bei einer solchen Gestaltung mit einem vergleichsweise großen Winkel, insbesondere einem von mehr als 90°, ist eine noch flexiblere Nutzung mit variableren Krümmungsradien möglich. Die Schabkante endet vorzugsweise am distalen Schabkantenende in einem in etwa orthogonal zur Haupterstreckungsrichtung ausgerichteten Klingenkantenabschnitt. Bei einem Winkel von mehr als 90° ausgehend von diesem distalen Schabkantenende führt dies zu einer Art Einbuchtung. Hierdurch ist das genannte Erheben der Schabkante um vorzugsweise einige Millimeter bedingt.

Im genannten Klingenkantenabschnitt zwischen Schabkante und Griff kann das Klingenprofil abgerundet oder umgebogen sein, um Verletzungen zu vermeiden, wenn die Klinge hier vom Nutzer umgriffen wird. Alternativ kann der Griff auf näher an die Schabkante herangeführt sein, insbesondere durch eine asymmetrische Ausgestaltung des Griffs.

Das distale Schabkantenende und/oder ein distales Klingenende der Klinge ist vorzugsweise maximal um eine Länge von 50 mm vom Übergang zwischen Griff und Klinge beabstandet, insbesondere zwischen 35 mm und 45 mm.

Wenngleich die bevorzugte Länge von maximal 60 mm eingangs schon erwähnt wurde, sind solche noch geringeren Gesamtlängen der Klingen oder zumindest des distalen Schabkantenendes von Vorteil, um mit diesem noch schneller und präziser arbeiten zu können. Im bevorzugten Längenbereich von etwa 45 mm ergibt sich ein Werkzeug mit sehr kurzer Klinge. Bei einer üblichen Grifflänge von etwa 120 mm erstreckt sich die Klinge somit nur etwa 1/3 so weit in Haupterstreckungsrichtung wie der Griff.

Die Klingenkante mit der Schabkante kann im Bereich der Schabkante mit einem Wellenschliff mit einer Mehrzahl von Vertiefungen versehen sein, wobei vorzugsweise nur einseitig solche Vertiefungen vorgesehen sind. Der Wellenschliff ist hilfreich, damit beim Schaben das abgeschabte Fett an der Klinge hängen bleibt. Es wurde festgestellt, dass dies durch den Wellenschliff begünstigt wird. Vorzugsweise ist der Wellenschliff jedoch nur einseitig vorgesehen, da auf der beim Schaben nach vorne gewandten Fläche ein solches Anhaften nicht gewünscht ist und zudem das beidseitige Anschleifen die Gefahr erhöht, beim Schaben in das Fleisch einzuschneiden.

Die Verwendung des Wellenschliffs ist jedoch nicht alternativlos. Die Schabkante kann stattdessen auch eine nahezu unmittelbar durch den Stanzvorgang der Herstellung herstellbare rechteckartige Form aufweisen, die beidseitig durch jeweils scharfkantige 90°-Winkel das Schaben mit beiden Seiten der Klinge gestattet. Ein solches Werkzeug eignet sich daher für Linkshänder sowie Rechtshänder.

Die spitz hervorragende Ausgestaltung der Greifkontur wird vorzugsweise durch mindestens eine Greifspitze mit einem Krümmungsradius von maximal 2 mm gebildet. Die Greifkontur weist jedoch vorzugsweise mehr als eine Greifspitzen auf, insbesondere zwei oder drei Greifspitzen.

Der genannte Krümmungsradius von maximal 2 mm stellt eine vergleichsweise stumpfe Form der Spitze dar, wobei dies ausreichen kann, um die Silberhaut im Bereich eines Knochens öffnen zu können, um anschließend mit der Greifspitze hier einzufahren. Im Idealfalle verhakt sich die Greifspitze nach dem Durchstechen der Silberhaut und gestattet es somit, durch eine ziehende Bewegung die Silberhaut vollständig abzuziehen. Die vergleichsweise stumpfe genannte Greifspitze mit einem Krümmungsradius von maximal 2 mm hat eine hohe Stabilität. Dennoch wird es als vorteilhaft angesehen, wenn der Krümmungsradius der Greifspitze kleiner ist, insbesondere unterhalb von 0,5 mm oder gar unterhalb von 0,05 mm liegt. Weiterhin hat die Greifkontur vorzugsweise nicht nur eine Greifspitze, sondern mehrere. Insbesondere zwei oder drei Greifspitzen haben sich als vorteilhaft herausgestellt.

Mit diesen mehreren Greifspitzen ist sehr zuverlässig gewährleistet, dass beim Durchdringen der Greifspitzen durch die Silberhaut diese anhakt und somit zuverlässig und meist in einem Durchgang vollständig abgezogen werden kann.

Bei einer besonderen Ausgestaltung ist es auch möglich, die Klinge im Bereich der Greifspitzen durch eine Biegebearbeitung derart auszugestalten, dass sich die mindestens eine Biegespitze aus der Haupterstreckungseben der Klinge hinaus erhebt. Hiermit kann ein Verhaken der Greifkontur mit der Silberhaut begünstigt werden.

Die Greifkontur ragt vorzugsweise quer zur Haupterstreckungsrichtung um eine Länge von mindestens 2 mm gegenüber einem Klingenkantenabschnitt zwischen Greifkontur und Griff hervor, vorzugsweise um mehr als 5 mm, insbesondere zwischen 8 mm und 15 mm. Dieses Überragen der Greifkontur ist erforderlich, damit sie ausreichend tief unter die Silberhaut geschoben werden kann, um diese anschließend abzuziehen. Der genannte Bereich zwischen 8 und 15 mm gewährleistet besonders gut, dass sich die Greifkontur mit der Silberhaut verhakt.

Die Klinge kann im Bereich der Greifkontur mit einem Fasenschliff versehen sein. Durch einen Fasenschliff im Bereich der Greifkontur, insbesondere der Greifspitzen, wird das Durchstechen erleichtert und das Verhaken nochmals begünstigt. Ein solcher Schliff ist jedoch nicht zwingend erforderlich. Wie oben bereits im Zusammenhang mit dem Wellenschliff auf der gegenüberliegenden Seite erwähnt, kann das Werkzeug mit einem einfachen Stanzprozess hergestellt werden. Sowohl auf den Wellenschliff als auch auf den Fasenschliff kann verzichtet werden, so dass die Klinge dann eine weitgehend vollständig einheitliche Stärke aufweist, beispielsweise von 0,2 bis 0,8 mm. Dementsprechend ist eine sehr preisgünstige Herstellung durch einen Stanzprozess mit nur wenigen erforderlichen Nacharbeitungsschritten möglich.

Der Griff ist ähnlich einem üblichen Messergriff ausgestaltet und kann beispielsweise aus vernieteten Teilschalen aus Kunststoff oder Holz bestehen oder als den Klingenschaft umgebendes Kunststoff-Spritzgussteil ausgebildet sein. Die Grifflänge in Haupterstreckungsrichtung beträgt vorzugsweise mehr als 100 mm, insbesondere zwischen 110 m und 140 mm.

Der Griff weist vorzugsweise an seinem zur klingen weisenden Ende eine Aufweitung auf. Diese Aufdickung des Griffs ermöglicht es, starke Kräfte einzuleiten, ohne mit der Hand in den Klingenbereich abzurutschen. Insbesondere da durch das entfernte Fett das Werkzeug rutschig werden kann, ist eine solch formschlüssige Verhinderung des Abgleitens der Hand in Richtung der Klinge sehr vorteilhaft.

Der Griff weist vorzugsweise eine unrunde Form mit einem beispielsweise eher ovalen Querschnitt auf, um die Führung des Werkzeugs in genauer Weise zu gewährleisten. Um zwischen den beiden Teilwerkzeugen des Greifers und der Schabkante in haptisch angenehmer Weise wechseln zu können, ist der Griff vorzugsweise bezüglich seines Querschnittes symmetrisch ausgestaltet. Er behält somit die subjektiv gleiche Formgebung, wenn das Werkzeug zum Wechsel des Teilwerkzeugs um 180° um seine Haupterstreckungsachse gewendet wird.

Das beschriebene Werkzeug wird bestimmungsgemäß vorzugsweise zur Ablösung von Sitberhaut und/oder Fett von Spare-Ribs verwendet.

Zum Ablösen der Silberhaut wird die Greifkontur entweder zwischen Sitberhaut und Fleisch der Spare-Ribs geschoben und die Silberhaut anschließend vom Fleisch abgehoben. Demgegenüber von Vorteil ist es, wenn die Greifkontur durch die Silberhaut der Spare-Ribs hindurchgestochen, vorzugsweise im Bereich eines Rippenknochens, und die Silberhaut anschließend vom Fleisch abgehoben wird.

Zur Entfernung von Fett unterhalb der Silberhaut wird die Schabkante an eine Vertiefung zwischen zwei Rippenknochen an die Spare-Ribs angepresst und dann entlang Verlaufsrichtung der Rippenknochen durch die Vertiefung schabend hindurchgezogen.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.
Fig. 1 und 2 zeigen eine bevorzugte Ausgestaltung eines erfindungsgemäßen Werkzeugs.
Fig. 3B bis 3G zeigen weitere Varianten eines solchen Werkzeugs im Vergleich zu der in Fig. 3A dargestellten Variante, die der der Fig. 1 und 2 entspricht.
Fig. 4A bis 4D zeigt die bestimmungsgemäße Verwendung des Werkzeugs.

### DETAILLIERTE BESCHREIBUNG DER AUSFÜHRUNGSBEISPIELE

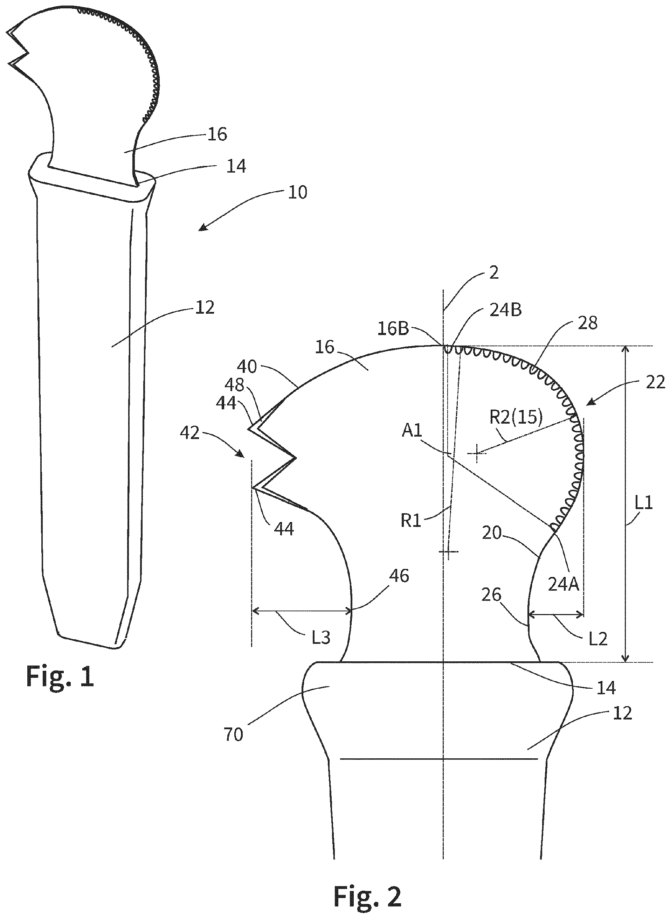

Fig. 1 zeigt das erfindungsgemäße Werkzeug. Dieses verfügt über eine vergleichsweise kurze Klinge 16, an die sich in einer Haupterstreckungsrichtung ein Griff 12 anschließt. Der Griff hat etwa eine Länge von 12 cm. Die Klinge hat in etwa eine freie Länge L1 ab einem Übergang 14 zwischen Griff 12 und Klinge 16 von etwa 45 mm.

Die Formgebung der Klinge ist anhand von Fig. 2 genauer beschrieben. Die Klinge 16 verfügt auf bezogen auf die Haupterstreckungsrichtung 2 gegenüberliegenden Seiten über zwei Teilwerkzeuge. Auf der in der Darstellung rechten Seite ist eine Schabkante 22 vorgesehen. Auf der gegenüberliegenden linken Seite ist eine Greifkontur 42 vorgesehen. Diese Teilwerkzeuge sind vom Griff durch einen leicht verjüngten Hals im Bereich der gegenüberliegenden Klingenkantenabschnitten 26, 46 getrennt und erheben sich in Querrichtung orthogonal zur Haupterstreckungsrichtung jeweils über diesen Halsbereich.

Die Schabkante 22 erstreckt sich über einen Winkel A1 von etwa 135° und ist kontinuierlich gekrümmt, wobei im Bereich des distalen Schabkantenendes 24B der Krümmungsradius R1 etwa 30 mm beträgt und von dort aus in Richtung des proximalen Schabkantenendes 24A sinkt, so dass der Krümmungsradius R2 in etwa auf der Mitte der Schabkante 22 etwa 15 mm beträgt. Da das distale Schabkantenende 24B mit dem distalen Klingenende 16B zusammenfällt, ist nach Überspannen von etwa 135° das proximale Schabkantenende 24A bereits in einer Art Einbuchtung der Klinge im Bereich des Halsen und dortigen Klingenkantenabschnitts 26 vorgesehen. Hier ist die Klinge um eine Länge L2 von etwa 8 mm gegenüber dem exponiertesten Abschnitt der Schabkante 22 zurückgesetzt.

Die Schabkante 22 ist auf der in Fig. 2 zum Betrachter hin weisenden Seite mit einem Wellenschliff 28 versehen. Auf der dem Betrachter abgewandten gegenüberliegenden Seite ist ein solcher Wellenschliffvorzugsweise nicht vorgesehen.

Die Greifkontur 42 auf der gegenüberliegenden Seite erhebt sich gegenüber einem Klingenkantenabschnitt 46 im Halsbereich um eine Länge L3 von etwa 14 mm. Sie ist mit zwei Greifspitzen 44 vorgesehen, deren Krümmungsradius vernachlässigbar gering ist, so dass die Greifspitzen 44 ausgesprochen spitz ausgestaltet sind. Dies wird durch einen Fasenschliff 48 noch verstärkt.

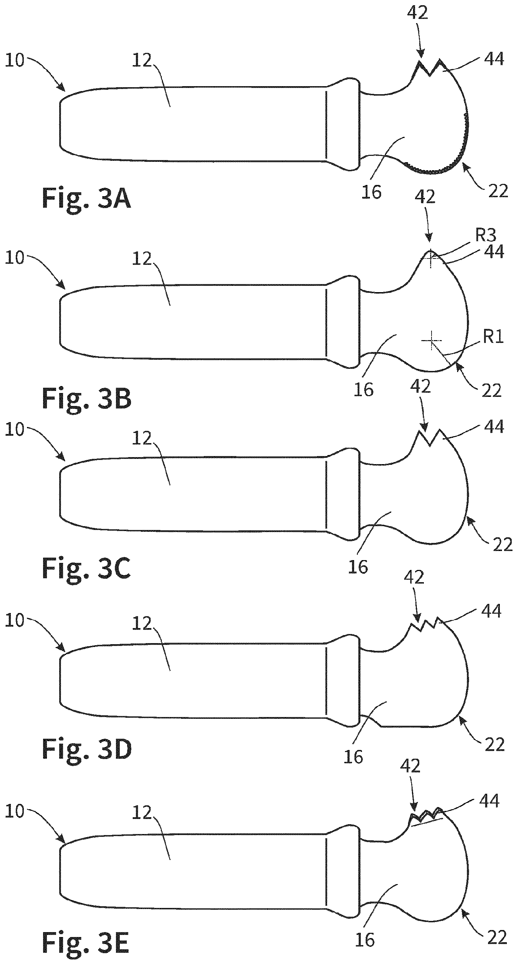

Die Fig. 3B bis 3E zeigen Varianten eines solchen Werkzeugs im Vergleich zur Fig. 3A, die nochmals das Werkzeug der Fig. 1 und 2 darstellt.

Bei der Gestaltung gemäß Fig. 3B ist die Greifkontur 42 nur mit einer Greifspitze ausgestaltet, wobei diese einen Krümmungsradius R3 von etwa 2 mm aufweist. Somit ist die Greifspitze 44 vergleichsweise stumpf ausgestaltet, was jedoch je nach Technik des Durchstechens oder Durchreißens der Silberhaut ausreichend sein kann. In jedem Fall ist der Krümmungsradius R3 stets geringer als der Krümmungsradius R1. Es kann ein in der Figur nicht dargestellter Fasenschliff und/oder ein Wellenschliff wie beim Ausführungsbeispiel der Figur 1 vorgesehen sein.

Bei der Gestaltung gemäß Fig. 3C ist abweichend von der Gestaltung der Fig. 3A auf jegliches Anschleifen verzichtet worden, so dass die Klinge 16 nahezu ausschließlich mittels einer Stanzbearbeitung erzeugt werden kann, ohne dass relevante Nachbearbeitungsschritte erforderlich sind.

Bei der Gestaltung gemäß Fig. 3D ist die Greifkontur 42 mit insgesamt drei Greifspitzen 44 versehen, die mit oder ohne Fasenschliff ausgebildet sein können. Gleiches gilt für die Ausgestaltung der Fig. 3E.

Bei der Ausgestaltung gemäß Fig. 3D ist zusätzlich die Schabkante 22 anders gestaltet, indem diese nur etwa einen Winkel von 90° überspannt. Die Schabkante 22 verliert hierdurch zwar Variabilität in Hinblick auf ihren Krümmungsradius. Dafür gewinnt die Klinge an Stabilität.

Bei der Gestaltung gemäß Fig. 3E ist sind die Greifspitzen 44 der Greifkontur 42 leicht gebogen, was das Ergreifen und Halten der Silberhaut verbessern kann. Allerdings ist ein solches Werkzeug 10 dann nicht gleichermaßen gutdurch Rechtshänderund Linkshänderzu handhaben.

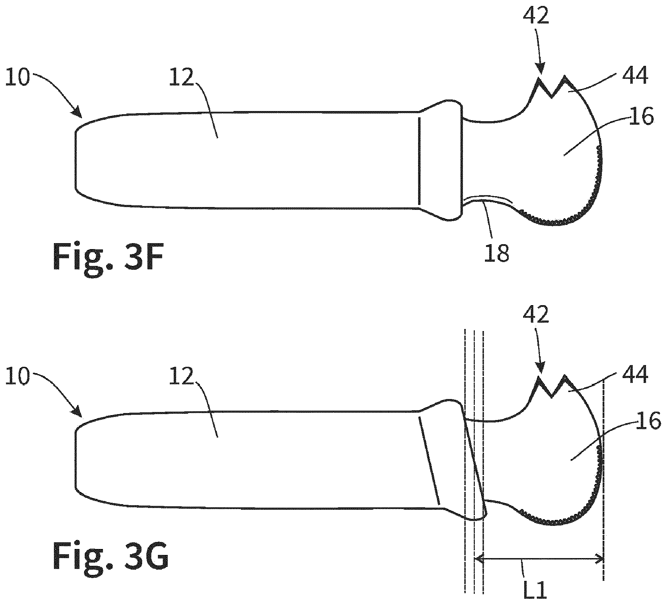

Die Gestaltungen der Fig. 3F und 3G sind Varianten zur Gestaltung der Fig. 3A. Bei der Gestaltung gemäß Fig. 3F ist vorgesehen, dass auf Seite der Schabkante 22 die Klinge abgerundet wurde, so dass auch dann keine Verletzungen drohen, wenn dort, wie in der Praxis nicht unüblich, zur Stützung beim Schaben der Zeigefinger des Nutzers anliegt. Die alternative Gestaltung gemäß Fig. 3G begegnet dem dadurch, dass der Griff 12 eine schräggestelltes Ende hin zur Klinge 16 aufweist. In diesem Falle einer asymmetrischen Gestaltung ist die oben genannte Länge L1 in Haupterstreckungsrichtung ausgehend von einer Mittelposition zwischen den beidseitigen Austrittspunkten der Klinge 16 aus dem Griff 12 zu messen.

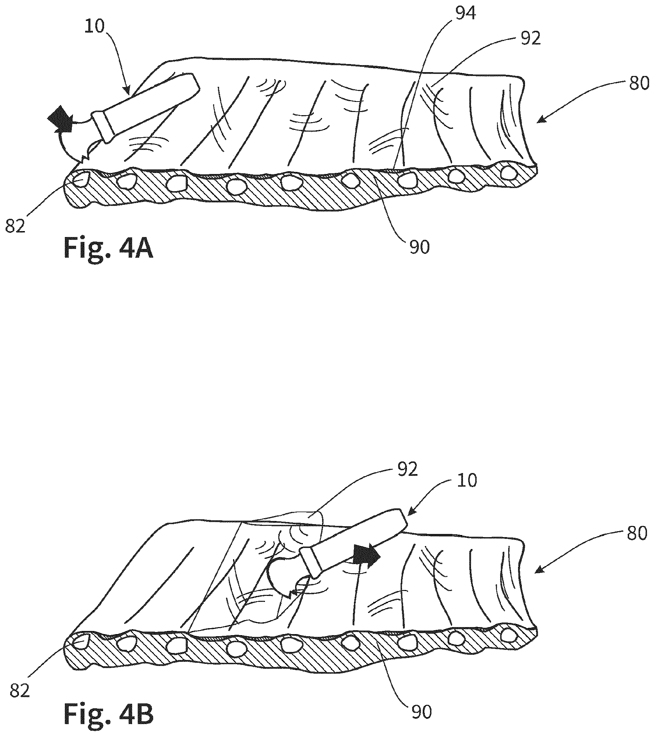

Die Fig. 4A bis 4D zeigen die bestimmungsgemäße Verwendung des Werkzeugs. Die Richtung, in die das Werkzeug bzw. seine Klinge bewegt wird, ist in den Figuren durch die dicken schwarzen Pfeile gekennzeichnet.

Wie in Fig. 4A dargestellt wird, wird zunächst mittels der Greifkontur 42 die die Spare-Ribs 80 abschließende Silberhaut 92 durchstochen. Dies geschieht in einem Eckbereich der Silberhaut 92 und vorzugsweise unmittelbar oberhalb eines Rippenknochens 82, da hier ein Ausweichen der Sitberhaut 92 nicht möglich ist. Sobald die Silberhaut 92 durchstochen ist, verhaken sich die Greifspitzen der Greifkontur 42 hier, so dass dann in der in Fig. 4B dargestellten Weise die Silberhaut durch Verlagerung des Werkzeugs parallel zu seiner Oberfläche abgezogen werden kann.

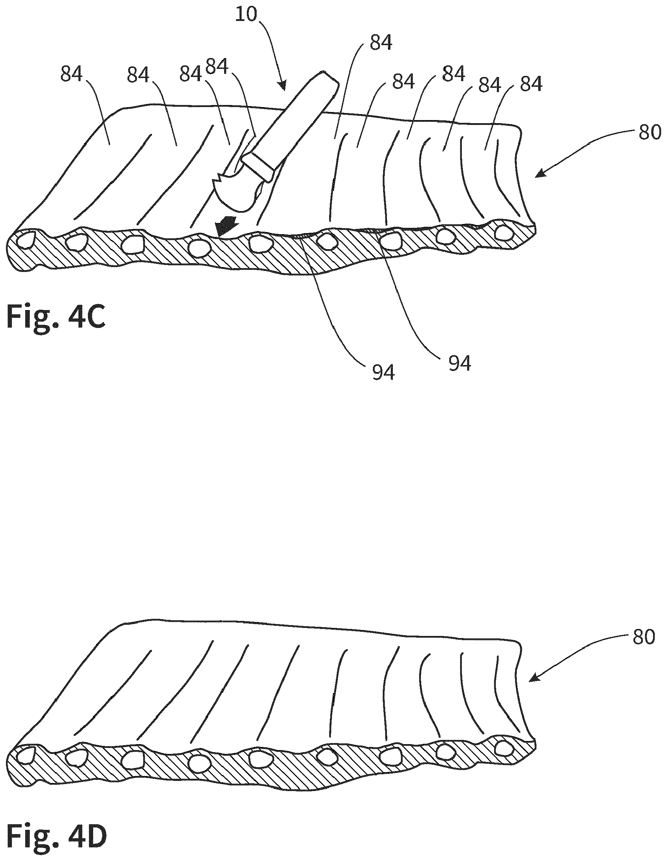

Nach Entfernen der Silberhaut werden die an der Oberseite verbliebenen Streifen aus Fett 94 entfernt. Dies geschieht, indem in der in Fig. 4C verdeutlichten Weise das Werkzeug 10 nach Wenden desselben mit seiner Schabkante 22 durch die Vertiefungen 84 schabend gezogen wird, die sich zwischen den Rippenknochen 82 befinden. Hierdurch kann das Fett 94 entfernt werden, so dass in der in Fig. 4D verdeutlichten Weise der Rippchenstreifen fertig vorbereitet ist. Es schließt sich üblicherweise die Aufbringung einer Gewürzmischung und Marinaden an. Anschließend folgt der Garprozess.

## Patentansprüche

1. Werkzeug (10) zur Vorbereitung von Spare-Ribs (80) durch Entfernen von Silberhaut (92) und Fett (94) mit den folgenden Merkmalen:
a. das Werkzeug (10) verfügt über einen Griff (12) sowie über eine sich an den Griff in einer Haupterstreckungsrichtung (2) anschließende flache Klinge (16), und
b. die Klinge (16) weist bezogen auf die Haupterstreckungsrichtung (2) eine asymmetrische Formgebung mit einer rechtsseitigen Klingenkante (20) und einer linksseitigen Klingenkante (40) auf und
c. die eine Klingenkante (20) ist mit gekrümmten Schabkante (22) ausgestattet, die zwischen einem proximalen Schabkantenende (24A) und einem distalen Schabkantenende (24B) mindestens einen Winkel von 75° überspannt, wobei das distale Schabkantenende (24B) und/oder ein distales Klingenende (16B) maximal eine Länge (L1) 60mm von einem Übergang (14) zwischen Griff (12) und Klinge (16) beabstandet ist, und
d. die andere Klingenkante (40) ist mit einer quer zur Haupterstreckungsrichtung spitz hervorragenden Greifkontur (42) versehen.

2. Werkzeug (10) nach Anspruch 1 mit den folgenden zusätzlichen Merkmalen:
a. die Schabkante (22) weist über einen Winkelbereich (A) von mindestens 75° eine Krümmung mit einem Krümmungsradius (R1, R2) zwischen 10 mm und 40 mm auf, insbesondere zwischen 15 mm und 30 mm, auf.

3. Werkzeug (10) nach Anspruch 2 mit den folgenden zusätzlichen Merkmalen:
a. die Schabkante (22) weist Teilabschnitte (22A, 22B) unterschiedlicher Krümmung auf, wobei in einem ersten Teilabschnitt von mindestens 45° der Krümmungsradius (R2) geringer ist als der Krümmungsradius (E1) in einem zweiten Teilabschnitt von mindestens 45°.

4. Werkzeug (10) nach einem der vorstehenden Ansprüchen mit dem folgenden zusätzlichen Merkmal:
a. Die gekrümmte Schabkante (22) überspannt einen Winkel (A1) von mehr als 90°, insbesondere von mindestens 105°, wobei die Schabkante (22) sich quer zur Haupterstreckungsrichtung über einen Klingenkantenabschnitt (26) zwischen Schabkante (22) und Griff (12) erhebt, vorzugsweise um eine Distanz (L2) von mindestens 2mm, insbesondere vorzugsweise um mindestens 5mm.

5. Werkzeug (10) nach einem der vorstehenden Ansprüche mit dem folgenden zusätzlichen Merkmal:
a. Das distale Schabkantenende (24B) und/oder ein distales Klingenende (16B) der Klinge (16) ist maximal um eine Länge (L1) von 50mm vom Übergang (14) zwischen Griff (12) und Klinge (16) beabstandet, insbesondere zwischen 35 mm und 45 mm.

6. Werkzeug (10) nach einem der vorstehenden Ansprüche mit dem folgenden zusätzlichen Merkmal:
a. die Klingenkante (20) ist im Bereich der Schabkante (22) mit einem Wellenschliff (28) mit einer Mehrzahl von Vertiefungen versehen, wobei vorzugsweise nur einseitig solche Vertiefungen vorgesehen sind.

7. Werkzeug (10) nach einem der vorstehenden Ansprüche mit dem folgenden zusätzlichen Merkmal:
a. Die spitz hervorragende Ausgestaltung der Greifkontur (42) wird durch mindestens eine Greifspitze (44) mit einem Krümmungsradius (R3) von maximal 2 mm gebildet, insbesondere vorzugsweise mit einem Krümmungsradius vom maximal 0,5 mm.

8. Werkzeug (10) nach einem der vorstehenden Ansprüche mit dem folgenden zusätzlichen Merkmal:
a. Die Greifkontur (42) ragt quer zur Haupterstreckungsrichtung (2) um eine Länge (L3) von mindestens 2 mm gegenüber einem Klingenkantenabschnitt (46) zwischen Greifkontur (42) und Griff (12) hervor, vorzugsweise um mehr als 5 mm, insbesondere zwischen 8 mm und 15 mm.

9. Werkzeug (10) nach einem der vorstehenden Ansprüche mit dem folgenden zusätzlichen Merkmal:
a. Die Greifkontur (42) weist mindestens zwei Greifspitzen (44) auf.

10. Werkzeug (10) nach einem der vorstehenden Ansprüche mit dem folgenden zusätzlichen Merkmal:
a. die Klinge (16) ist im Bereich der Greifkontur (42) mit einem Fasenschliff (48) versehen.

11. Werkzeug (10) nach einem der vorstehenden Ansprüche mit dem folgenden zusätzlichen Merkmal:
a. Der Griff (12) weist an seinem zur Klingen weisenden Ende eine Aufweitung (70) auf.

12. Werkzeug (10) nach einem der vorstehenden Ansprüche mit mindestens einem der folgenden zusätzlichen Merkmale:
b. die Klinge (16) ist aus Edelstahl gefertigt, und/oder
c. die Klinge (16) ist als Stanzteil aus einem Metallblech gefertigt, und/oder
d. die Klinge (16) weist eine Stärke zwischen 0,2 und 0,8 mm auf, und/oder
e. die Klinge (16) ist im Bereich der Greifkontur (42) gebogen, so dass mindestens eine Greifspitze eine Haupterstreckungsebene der Klinge überragt.

13. Verwendung eines Werkzeugs (10) nach einem der vorstehenden Ansprüche zur Ablösung von Silberhaut (92) und/oder Fett (94) von Spare-Ribs.

14. Verwendung nach Anspruch 13 mit mindestens einem der folgenden Merkmale:
a. zur Entfernung der Silberhaut (92) wird die Greifkontur (42) zwischen Silberhaut (92) und Fleisch (90) der Spare-Ribs (80) geschoben und die Silberhaut (92) anschließend vom Fleisch (90) abgehoben, und/oder
b. zur Entfernung der Silberhaut (92) wird die Greifkontur (42) durch die Silberhaut (92) der Spare-Ribs (80) hindurchgestochen, vorzugsweise im Bereich eines Rippenknochens (82), und die Silberhaut (92) anschließend vom Fleisch (90) abgehoben, und/oder
c. zur Entfernung von Fett (94) unterhalb der Sitberhaut (92) wird die Schabkante (22) an eine Vertiefung (84) zwischen zwei Rippenknochen (82) an die Spare-Ribs (80) angepresst und dann entlang Verlaufsrichtung der Rippenknochen (82) durch die Vertiefung (84) schabend hindurchgezogen.
